# EUROPEAN PATENT SPECIFICATION

(11) **EP 0 295 585 B1**
(45) Date of publication and mention of the grant of the patent: **15.09.1993**
(21) Application number: 88109308.2
(22) Date of filing: 10.06.1988
(51) Int. Cl.: F16F 1/42, F16F 3/10

(54) **Tubular elastomeric spring having controllable breakover and spring rate**
Röhrenförmige Elastomerfeder, bei der das Beulverhalten und die Federrate kontrollierbar sind
Ressort tubulaire en caoutchouc, possédant un point de non-linéarité et une caractéristique élastique contrôlables

(30) Priority: 15.06.1987 US 61481
(43) Date of publication of application: 21.12.1988
(73) Proprietor: Paton, H. Neil, Seattle Washington 98119 (US)
(72) Inventor: Paton, H. Neil, Seattle Washington 98119 (US)
(74) Representative: Baillie, Iain Cameron

(56) References cited:
- EP-A- 0 045 497
- EP-A- 0 184 848
- DE-A- 1 053 878
- GB-A- 648 774
- GB-A- 2 088 523
- PATENT ABSTRACTS OF JAPAN, vol. 8, no. 128 (M-302)[1565], 14th June 1984; & JP-A-59 29 831 (IKEDA HIYUUMUKAN K.K.) 17-02-1984

## Description

### Background of the Invention

This invention relates to tubular elastomeric springs, and, more particularly to tubular elastomeric springs which provide both constant and rising spring rates. As used herein, the term "breakover" means the change in spring deflection from constant to rising rate.

Cylindrical elastomeric springs typically provide only constant rate or rising rate deflection, not both. Those cylindrical elastomeric springs which provide both constant and rising rate deflection, moreover, have unsatisfactory breakovers. These springs therefore tend to be unacceptable for applications which require rising rate performance above a certain load and constant rate performance below it.

Such applications typically involve lightweight passenger vehicles, for example, in which hood height requirements, suspension strut lengths, and other environmental factors effectively limit the operational length of the spring. In order to meet these requirements, yet provide the requisite load bearing capacity, the spring often has to be constructed with such thick walls that is has no breakover at all. Consequently, the performance versatility which could have been obtained from having both constant and rising rate performance is lost.

Document EPA-184,848 discloses a spring in accordance with the precharacterizing part of the respective independent claims set out below. In one embodiment described in this document the tube wall is thinner at the middle and becomes progressively thicker towards the ends. This thinning provides the starting point of the bulging instability. The characteristics of the spring are determined by wall thickness, length of body, size, number and location and spacing of the coils, and the properties of the material of which the body is composed. All these factors, however, demand substantial retooling and it is very unpredictable as to how each of the factors will change the properties of the finished spring. It is therefore very difficult to design a spring to have particular required characteristics according to the arrangement of this document.

In the present invention the above difficulties are overcome by the provisions recited in the characterizing part of the independent claims below. The outer surface of the tube may have more than one annular groove. The position, depth and length of the annular groove or grooves may be selected to give the desired breakover and spring rate effects. The groove or grooves nay be formed by shaping the surface either symmetrically to or eccentric with the longitudinal axis of the spring depending upon whether the load is to be applied axially or non-axially and other factors. Any suitable method may be used to accomplish such shaping, including in situ molding, compression molding, transfer molding, injection molding, or appropriate contouring or profiling of pre-formed blanks.

Thus, it will be appreciated from the foregoing summary that this invention may be used to induce breakover in those thick-walled tubular elastomeric springs which normally do not exhibit any breakover. When such breakover is obtained, whether by such shaping or naturally, this invention may be used to control breakover so that it occurs at a desired load and deflection. In addition, this invention may be used to control the spring effects which accompany and follow breakover.

These and other features, objects and advantages of the present invention will become apparent from the detailed description and claims to follow, taken in conjunction with the accompanying drawings in which like parts bear like reference numerals.

### Brief Description of the Drawings

Fig. 1 is a perspective of one presently preferred embodiment of a cylindrical elastomeric spring made according to this invention;
Fig. 2 is a section taken along the line 2-2 in Fig. 1;
Fig. 3 is a graph of load versus deflection of the Fig. 1 spring and other springs made in accordance with this invention;
Fig. 4 is a fragmentary longitudinal section, depicting deflection of one intracoil spring segment of the Fig. 1 spring:
Fig. 5 is a graph of load versus deflection of the Fig. 4 segment:
Fig. 6 - 9 are schematics depicting axial compression of a straight sided cylindrical elastomeric spring with side walls too thick to permit breakover;
Fig. 10 is a graph of load versus deflection of the Figs. 6 - 9 spring;
Fig. 11 - 15 are schematics depicting axial compression of a cylindrical elastomeric spring made in accordance with the present invention;
Fig. 16 is a graph of load versus deflection of the Figs. 11 -15 springs;
Fig. 17 is a longitudinal section of an eccentrically contoured elastomeric spring made in accordance with this invention;
Fig. 18 is a longitudinal section, in enlarged scale, of one end of the Fig. 1 spring and its end seal;
Fig. 19 is a longitudinal section generally similar to Fig. 18, depicting the end seal associated with the other end of the Fig. 1 spring in contact with a seat.

### Detailed Description of the Drawings

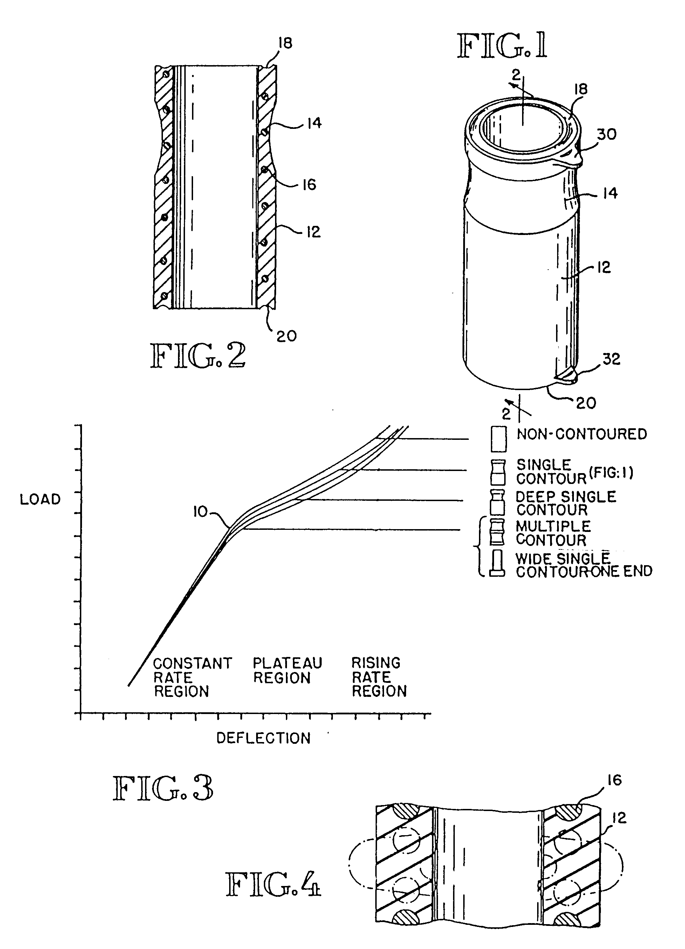

Referring to Figs. 1-3, one presently preferred embodiment of the tubular elastomeric spring of this invention provides a load versus deflection curve, such as that depicted in Fig. 3, made up of a generally constant rate region, a generally rising rate region and an intermediate plateau region. In the example, breakover of the Fig. 1 spring occurs at the knee of the Fig. 3 curve (generally referenced by numeral 10).

The Fig. 1 spring is made by the process of forming a first portion of the spring (generally designated by numeral 12 in Figs. 1 and 2) with a generally cylindrical inner bore and a generally straight sided outer profile. A second portion of the spring, (generally referenced by numeral 14 in Figs. 1 and 2) has an inner bore which conforms to the inner bore of portion 12. Unlike prior tubular elastomeric springs or the processes for making them, this invention provides for control of breakover by shaping the outer profile of portion 14 with respect to the outer profile of portion 12. According to this invention, the outer surface of portion 14 is so shaped that it will bulge outwardly to a greater extent than the outer surface of portion 12, causing breakover, at a predetermined load. This bulging differential is the result of a bulging instability which occurs in portion 14, as will be described presently.

The Fig. 1 spring includes a tubular elastomeric body, which, in the example illustrated, is reinforced by an embedded coil spring 16. The ends of the body are formed with grooves 18 and 20, so as to form respective seals with respect to the load application platens between which the spring is compressed, as will be described presently. In this example, the outer profile of portion 14 is shaped by a single concentric groove. The load versus deflection curve of the Fig. 1 spring is depicted by the curve labelled "Single Contour" in Fig. 3.

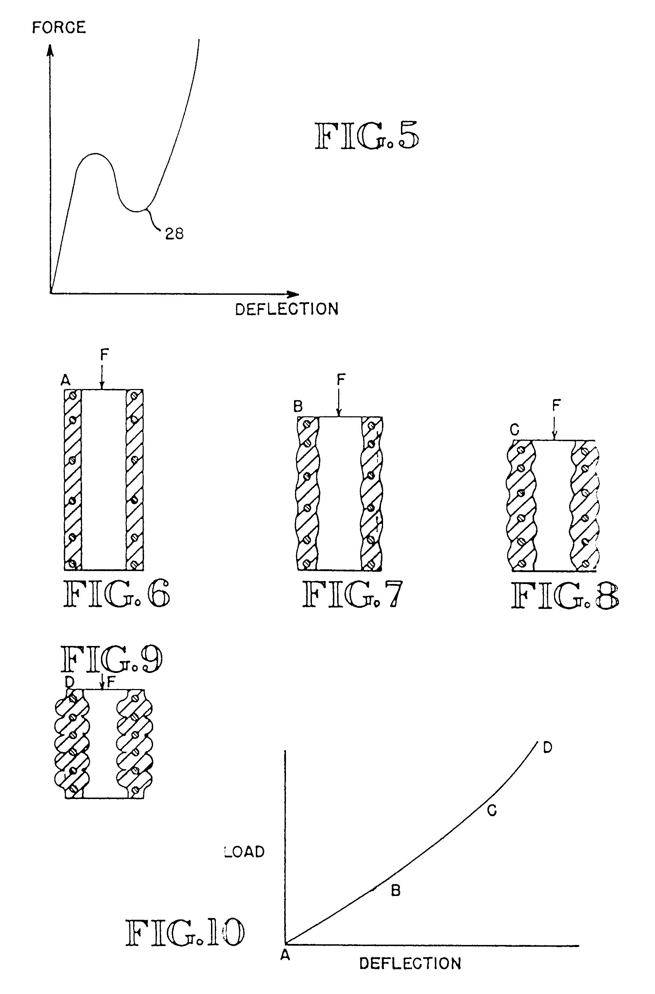

Referring now to Figs. 6 - 10, some cylindrical elastomeric springs are too short, or have thick walls, that they ordinarily provide only constant or rising spring rates. For example, the spring depicted in Figs. 6 - 9 exhibits essentially only a rising rate spring characteristic, which is reflected by the load versus deflection curve depicted in Fig. 10. As this spring is compressed axially from its fully relaxed position of Fig. 6, through the interim deflection positions of Figs. 7 and 8, and ultimately to its fully compressed position of Fig. 9, the elastomer is deflected under uniaxial compression. As the adjacent undulations thus formed "bottom out", they produce an increasing effective shape factor which tends to cause the progressively increasing or rising spring rate. This process is reflected by points A, B, C and D in Fig. 10, which respectively correspond to the progressive deflection positions of the spring depicted in Figs. 6 - 9.

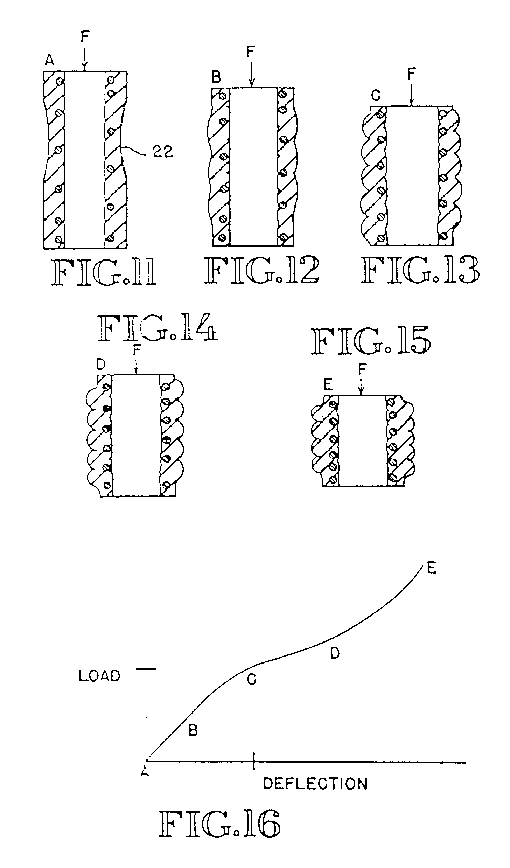

An important aspect of the present invention is that a spring which has only a rising rate, such as that depicted by Figs. 6 - 9, or a spring which has only a constant rate, may be adapted to provide both constant and rising rate, as well as satisfactory breakover, by appropriate shaping of the outer profile of the spring. That is, this invention provides a process for inducing and controlling breakover in a thick-walled cylindrical elastomeric spring. This may be understood by reference to Figs. 11 -16. In this example, the outer profile of the Fig. 6 spring has been contoured in the region generally designated by reference numeral 22 (Fig. 11) to form a single concentric groove which extends along approximately one third of the unloaded length of the spring. When subjected to an axial compressive load, as depicted by Figs. 11 - 15, the relatively thinner wall thickness which underlines this groove produces a bulging instability, the occurrence of which will be described presently. This causes the load versus deflection curve for the spring to breakover at a predetermined load and deflection coordinate. This coordinate is referenced by letter C in Fig. 16, and corresponds to the spring in the deflection position illustrated in Fig. 13.

Below the breakover coordinate, the spring provides a generally constant spring rate, as reflected by the generally linear form of the curve from point A to points B and C. Above the breakover coordinate, portion 22 first bulges outwardly to a greater extent than the outer surface of the rest of the spring on account of the occurrence of the bulging instability just mentioned. Then, as further deflection from point D to point E (Fig. 16) causes these bulges to "bottom out", the spring provides a generally rising rate, such as that already described with respect to the spring depicted in Figs. 6 - 9. The deflection positions which respectively correspond to points A - E are illustrated in Figs. 11 - 15. It will be appreciated that the spring, through appropriate contouring or other shaping of its outer profile, now provides a spring curve comparable to that depicted in Fig. 3.

Still another important aspect of the present invention is that such shaping also may be used to control breakover, the plateau region and the rising rate region of the spring curve of a cylindrical elastomeric spring which already provides breakover, whether by the process just described or naturally. Referring to Fig. 3, such control may be accomplished by appropriate contouring of the outer profile of the spring. The profiles exemplified by Fig. 3 are: a single contour formed adjacent one end of the spring, a single contour generally similar to that just described but of greater depth, multiple contours, and a wide single contour which extends from one enlarged end diameter end portion along the entire remaining length of the spring.

As will be apparent from Fig. 3, such profile variations affect the coordinates at which breakover occurs, the spring rate which persists throughout the plateau region, and the point at which the plateau region terminates and the rising rate region begins. Greater contouring tends to cause breakover to occur at a lower load than that which would otherwise be the case. The magnitude of this reduction seems to be more pronounced as the length and depth of the groove are increased, as reflected by the Fig. 3 plateau regions for the multiple or wide single contours, as compared to that for the single contour. That is to say, the greater the contouring as compared with a single contour, the breakover point and plateau region tend to shift to the right as depicted in Fig. 3. Contouring also appears to affect the transition point from the plateau region to the rising rate region, as well as the shape of the rising rate region. The depth and width of the contour is believed to affect the slope of this transition more than a simple straight wall change in outer diameter.

The shaping of the outer profile of the spring in accordance with the present invention may be concentric with or eccentric to the longitudinal axis of the spring. In those applications where the compressive load is to be applied coaxially, as generally depicted in Figs. 11 - 15, the shaping preferably is accomplished concentric with the longitudinal axis of the spring. The spring depicted in Fig. 1 and 2 is thus shaped. If the compressive load is applied in a non-axial fashion, however, such as would be the case if the spring were used in a trailing arm suspension of lightweight automobiles, vans, or trucks, the spring may be eccentrically shaped to offset the effects of such loading.

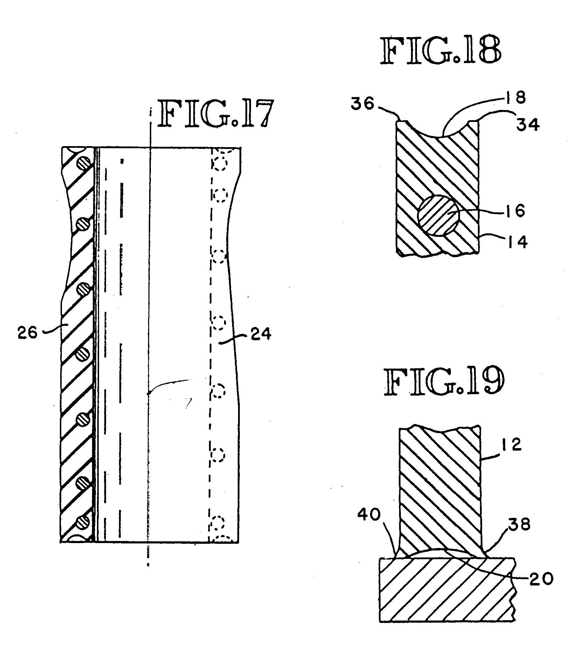

Referring now to Fig. 17, the spring may be eccentrically contoured so that its wall thickness varies about its circumference. Under non-axial compression, this eccentric contour tends to equalize the load which is borne by opposite sections of the spring walls. If the relatively larger component load is borne by wall section 24, as would be the case if this wall section were nearest to the fulcrum of a radial trailing arm suspension linkage, this wall will bear a disproportionally larger amount of load than that which is borne by the opposite wall section 26. This tends to cause unnecessary stiffness and unequal stress distribution in the spring. The eccentric contouring of the spring, however, which results in section 24 being effectively thinner than section 26, tends to reduce the resistance of wall section 24 to compression and thus transfers proportionately more load to section 26. The cumulative effects of this force bearing differential tend to equalize the load borne by diametrically opposed portions of the spring, provided the spring is appropriately positioned with respect to the fulcrum of the load platens.

The shaping of the outer profile of the spring as contemplated by this invention may be accomplished by any suitable process. For example, a cylindrical elastomeric spring may be preformed and then ground to the appropriate contour. Likewise, the spring may be formed with the prescribed shapes using conventional compression molding, transfer molding or injection molding techniques. This invention therefore is not to be limited by the particular shaping technique used and indeed satisfactory results may be obtained through use of shaping techniques other than those specifically mentioned herein. It thus will be recognized that references to "contouring" or "profiling" are not intended to limit application of the present invention to specific processes which involve the removal of preformed material. Indeed, the invention could be used with appropriate injection or compression molding techniques, in which the mold itself provides the prescribed shape, without the requirement of further material removal other than that necessary to satisfy applicable manufacturing tolerances.

Only certain portions of a thick wall spring made in accordance with this invention --those which are shaped in accordance with the present inventions -- exhibit the bulging instability which manifests itself as breakover and hence the plateau region, as shown (Fig. 3). In the case of a thin wall spring which naturally has a breakover, portions of it already exhibit such bulging instability. Shaping, however, accentuates the bulging tendencies of the shaped portions of such a spring. In either case, the remaining portions of the spring which are not so shaped exhibit no significant bulging instability tendencies. Indeed, they remain in essentially uniaxial compression throughout all of the deflection positions of the spring.

Each of those portions of a spring which are shaped in accordance with this invention has a force versus deflection curve such as that depicted in Fig. 5. Unlike the Fig. 3 curve, the Fig. 5 curve has a region 28 of negative slope. This is indicative of the occurrence of a bulging instability within the shaped portion of the spring. In the case of a reinforced spring, such as that depicted in Fig. 1, the instability occurs at the shaped body portions between adjacent coils of coil spring 16. If more than one such intracoil body segment is shaped, depending upon the extent of the contouring, the intracoil body segments involved tend to reach the point of bulging instability sequentially. Consequently, the cumulative effects of such instability occurrences appear as a plurality of the Fig. 5 force versus deflection curves. When superimposed upon one another, these form a composite force versus deflection curve for the spring which resembles that depicted in Fig. 3. The negative slope portions of the individual curves are offset by the positively sloped deflection curves of the unshaped portions of the spring, as well as those of the other shaped intracoil body segments not then manifesting this mode of deflection. The spring curve obtained therefore has a plateau-like region which corresponds to that depicted in Fig. 3.

Deflection of one such shaped intracoil body segment is depicted in Fig. 4. The body segment experiences localized effects of axial compression which appear as both inward and outward bulging of its inner and outer walls, respectively. The magnitude of the inward bulging of the inner wall is substantially less, however, than outward bulging of the outer wall, and indeed is comparatively negligible by comparison. Inner and outer circumferential or hoop strains in and adjacent to the inner and outer walls cause relatively incompressible material forming the body segment to "flow" radially outward, producing the intracoil lateral bulging and the overall appearance of a rubber coil of spiral configuration. These strains become increasingly positive with increases in axial compression and are distributed axially along the bulging surface so that the maximum strain appears about midway between adjacent coils of the coil spring and are essentially zero adjacent the coils themselves. The "flow" obtained as a result of this strain distribution causes the body segment to deflect momentarily in an unstable manner as if it were buckling.

In addition to the effects of shaping in accordance with this invention, the occurrence of such bulging instability is further controllable so that the plateau region appears when and for the duration desired. In addition to the length, depth, and number of contours formed, additional factors that lend to this control are: the size, number, location, and spacing of the coils of the embedded coil spring, if any; the properties of the material of which the body is composed; the thickness of the body segment wall relative to its length; and the position of the coil spring, if any, with respect to the inner wall of the body segment. The thinner the wall for a given coil spacing, the greater the tendency for the body segment to bulge. Likewise, the thinner the wall thickness and greater the length of the body segment, the greater the tendency for it to bulge. The provision of a coil spring having a diameter corresponding to the diameter of that portion of the spring of minimum wall thickness will have similar effects.

The number of active coils, coil diameter, and length of the body are additional control factors. ("Active coils" mean all but the end coils, which constitute inactive coils.) For example, the greater the number of active coils or the greater the spacing between the coils, the greater the tendency of the body segment involved to undergo a bulging instability.

The wire diameter or cross-sectional size of the individual coils of the coil spring 16 is still another control factor. In the absence of sufficient reinforcement due to inadequate coil diameter, the body tends towards asymmetric buckling depending upon its length, in accordance with well known principles of columnar loading. If its individual coils are too large in diameter, however, the coil spring assumes a greater proportion of the load carrying capacity of the spring and the beneficial effects of elastomeric loading may be correspondingly sacrificed.

With further reference to Fig. 1, the spring includes two tabs 30 and 32 which respectively project transversely from the ends of the spring. Each of these tabs includes an arcuate slot which coincides with the outline of the outer edge of the spring. This slot reduces the rigidity of that portion of the end which underlies the tab so that the end is still free to flex during the formation of a seal when the spring end is pressed against a spring platen. Tabs 30 and 32 could be used to index the rotative position of the spring with respect to the spring plates, to provide warranty or verification indicia or securement with the platens once the spring is installed for purposes of warranty verification, or for other suitable purposes related to the identification of use of the spring.

Referring now to Figs. 18 and 19, one or both ends of the spring may be sealed with respect to the spring seats between which it is compressed. In the example, both ends of the spring respectively include continuous channels 18 and 20. As depicted in Fig. 18, channel 18 has a semi-circular outline. It is of sufficient depth, and is of such width with respect to the full wall thickness of portion 14, that it forms parallel, inner outer lips 34 and 36. The lips are segmented by channel 18 and extend about the entire periphery of the upper end. The spacing between them is less than the full wall thickness of portion 14. Channel 20, together with lips 38 and 40, is of corresponding structure and is not described separately for sake of brevity.

When pressed against a conforming spring seat, as depicted in Fig. 19, lips 34 and 36, or 38 and 40, as the case may be, spread apart, causing the intervening channel to collapse and form a suction-like seal about the entire periphery of the associated end. One or both ends of the spring thus may be sealed so as to prevent the entrance of moisture, as well as dirt or other contaminants into the interior of the spring. In addition, the seal obtained may be used to provide a pressure seal with respect to positive or negative fluid pressure within the spring. Another advantage is that, by keeping the spacing between the lips less than the full wall thickness of the end involved, the spring can be formed with a cylindrical inner bore using a cylindrical mandrel.

## Claims

1. A process for controlling the spring rate and breakover of a tubular elastomeric spring comprising an elastomeric tube having a coil spring (16) embedded in said tube wall and extending the length of said tube, including the step of shaping the outer surface of said tube to form an annular groove (14), characterized in that the groove is closer to one end of the spring than to the other end and has a width that spans at least 2 coils of said coil spring (16) and leaves a portion of said outer surface (12) generally straight, such that said groove (14) will bulge outwardly to a greater extent than the straight portion causing breakover at a predetermined load.

2. A process according to claim 1 wherein the shaping further consists of forming a second annular groove (Fig. 3) separated from the first annular groove by the generally straight-sided portion.

3. A process according to claim 1 wherein the groove is formed adjacent one end of the spring.

4. A tubular elastomeric spring comprising an elastomeric tube having a coil spring (16) embedded in said tube wall and extending the length of said tube wherein the outer surface of the tube has an annular groove (14), characterized in that the groove is closer to one end of the spring than to the other end and has a width that spans at least 2 coils of said coil spring (16) but leaves a portion of said outer surface (12) generally straight, such that said groove (14) will bulge outwardly to a greater extent than the straight portion causing breakover at a predetermined load.

5. A spring according to claim 4, further characterised in that said groove is concentric with the longitudinal axis of said body spring (Fig. 2).

6. A spring according to claim 4, further characterised in that said groove is eccentric to the longitudinal axis of said body (Fig 17).

7. A spring according to claim 4, 5, or 6 wherein the groove (14) is adjacent one end of the spring.

8. A spring according to claim 4, 5, 6 or 7 including a second annular groove (Fig 3) separated from the first annular groove by the generally straight-sided portion (12).

9. A spring according to any of claims 4 to 8, characterised by a tab (30) projecting outwardly from one end.

10. A spring according to any of claims 4 to 9, wherein one end of the tube includes a concave portion (17) forming two parallel lips (34, 36) separated by a continuous channel (18) extending about the entire periphery of said one end, and spaced apart a distance less than the thickness of said wall, said lips (34, 36) being sufficiently flexible that they spread apart, causing said channel to form a suction seal about the entire periphery of said one end, when said one end is pressed against a surface.

11. A spring according to claim 10, wherein the other end of the tube includes a concave portion (20) forming two parallel lips (40, 38) separated by a second continuous channel (20) extending about the entire periphery of said other end, and spaced apart a distance less than the thickness of said wall, said lips (40, 38) being sufficiently flexible that they spread apart, causing said second continuous channel (20) to form a suction seal about the entire periphery of said other end, when said other end is pressed against a surface.

## Patentansprüche

1. Verfahren zur Kontrolle der Federkonstante und des Beulverhaltens einer röhrenförmigen Elastomerfeder, umfassend eine Elastomerröhre mit einer Schraubenfeder (16), die in der genannten Röhrenwand integriert ist und sich über die Länge der genannten Röhre erstreckt, gekennzeichnet durch den Schritt der Gestaltung der äußeren Oberfläche der genannten Röhre, so daß eine ringförmige Rille (14) gebildet wird, dadurch gekennzeichnet, daß die Rille sich näher zu einem Ende der Feder befindet als zu dem anderen Ende, und wobei die Rille eine Breite aufweist, die wenigstens 2 Wicklungen der genannten Schraubenfeder (16) spannt und einen Teil der genannten äußeren Oberfläche (12) allgemein gerade läßt, so daß die genannte Rille (14) sich bei vorbestimmter Spannung weiter nach außen beult als der gerade Teil dann eine Beulung bewirkt.

2. Verfahren nach Anspruch 1, dadurch gekennzeichnet, daß die Gestaltung ferner die Formung einer zweiten ringförmigen Rille (Figur 3) umfaßt, die durch einen allgemein geraden Seitenteil von der ersten ringförmigen Rille getrennt ist.

3. Verfahren nach Anspruch 1, dadurch gekennzeichnet, daß die Rille neben einem Ende der Feder ausgebildet ist.

4. Eine röhrenförmige Elastomerfeder, die eine Elastomerröhre mit einer Schraubenfeder (16) umfaßt, welche in der genannten Röhrenwand integriert ist und sich über die Länge der genannten Röhre erstreckt, wobei die äußere Oberfläche der Röhre eine ringförmige Rille (14) aufweist, dadurch gekennzeichnet, daß sich die Rille näher an einem Ende der Feder befindet als an dem anderen Ende, und daß die Rille eine Breite aufweist, die wenigstens 2 Wicklungen der genannten Schraubenfeder (16) spannt, sie jedoch einen Teil der genannten äußeren Oberfläche (12) allgemein gerade läßt, so daß sich die genannte Rille (14) bei einer vorbestimmten Spannung weiter nach außen beult als der gerade Teil dann eine Beulung bewirkt.

5. Feder nach Anspruch 4, ferner dadurch gekennzeichnet, daß die genannte Rille konzentrisch ist mit der Längsachse des genannten Federkörpers (Figur 2).

6. Feder nach Anspruch 4, ferner dadurch gekennzeichnet, daß die genannte Rille exzentrisch ist zu der Längsachse des genannten Körpers (Figur 17).

7. Feder nach Anspruch 4, 5 oder 6, dadurch gekennzeichnet, daß sich die Rille (14) neben einem Ende der Feder befindet.

8. Feder nach Anspruch 4, 5, 6 oder 7, dadurch gekennzeichnet, daß sie eine zweite ringförmige Rille (Figur 3) umfaßt, die durch den allgemein geraden Seitenteil (12) von der ersten ringförmigen Rille getrennt ist.

9. Feder nach einem der Ansprüche 4 bis 8, dadurch gekennzeichnet, daß von einem Ende ein Vorsprung (30) nach außen vorsteht.

10. Feder nach einem der Ansprüche 4 bis 9, dadurch gekennzeichnet, daß ein Ende der Röhre einen konkaven Teil (17) aufweist, der zwei parallele Lippen (34, 36) bildet, die durch einen ununterbrochenen Kanal (18) getrennt sind, der sich um den gesamten Umfang des genannten einen Endes erstreckt, und die mit einem Zwischenabstand zueinander angeordnet sind, der geringer ist als die Dicke der genannten Wand, wobei die genannten Lippen (34, 36) ausreichend elastisch sind, daß sie sich auseinanderspreizen lassen, so daß der genannte Kanal eine ansaugende Abdichtung um den gesamten Umfang des genannten einen Endes bildet, wenn das genannte eine Ende gegen die Oberfläche gedrückt wird.

11. Feder nach Anspruch 10, dadurch gekennzeichnet, daß das andere Ende der Röhre einen konkaven Teil (20) umfaßt, der zwei parallele Lippen (40, 38) bildet, die durch einen ununterbrochenen Kanal (20) getrennt sind, der sich um den gesamten Umfang des genannten anderen Endes erstreckt, und die mit einem Zwischenabstand zueinander angeordnet sind, der geringer ist als die Dicke der genannten Wand, wobei die genannten Lippen (40, 38) ausreichend elastisch sind, daß sie sich auseinanderspreizen lassen, so daß der genannte zweite ununterbrochene Kanal (20) eine ansaugende Abdichtung um den gesamten Umfang des genannten anderen Endes bildet, wenn das genannte andere Ende gegen die Oberfläche gedrückt wird.

## Revendications

1. Procédé de contrôle de la raideur et du point de rupture d'un ressort tubulaire en élastomère comprenant un tube en élastomère possédant un ressort hélicoïdal (16) noyé dans la paroi dudit tube et s'étendant sur la longueur dudit tube, procédé comprenant une étape de conformation de la surface externe dudit tube pour y former une gorge annulaire (14),
procédé caractérisé en ce que la gorge est plus proche d'une extrémité du ressort que de l'autre extrémité et possède une largeur s'étendant sur au moins 2 enroulements dudit ressort hélicoïdal (16) et laisse une partie de ladite surface externe (12) globalement droite de telle façon que ladite gorge (14) s'étende vers l'extérieur de façon plus importante que la partie droite, provoquant une rupture sous une charge prédéterminée.

2. Procédé selon la revendication 1, selon lequel la conformation comprend, de plus, la formation d'une seconde gorge annulaire (Figure 3) séparée de la première gorge annulaire par la partie de bord globalement droit.

3. Procédé selon la revendication 1, selon lequel la gorge est formée adjacente à une extrémité du ressort.

4. Ressort tubulaire en élastomère comprenant un tube en élastomère possédant un ressort hélicoïdal (16) noyé dans la paroi dudit tube et s'étendant sur la longueur dudit tube, ressort dans lequel la surface externe du tube possède une gorge annulaire (14),
ressort caractérisé en ce que la gorge est plus proche d'une extrémité du ressort que de l'autre extrémité et présente une largeur s'étendant sur au moins 2 enroulements dudit ressort hélicoïdal (16) mais laissant une partie de ladite surface externe (12) globalement droite de telle façon que ladite gorge (14) s'étende vers l'extérieur d'une façon plus importante que la partie droite, provoquant une rupture sous une charge prédéterminée.

5. Ressort selon la revendication 4, caractérisé, de plus, en ce que ladite gorge est concentrique à l'axe longitudinal dudit corps de ressort (Figure 2).

6. Ressort selon la revendication 4, caractérisé, de plus, en ce que ladite gorge est excentrée par rapport à l'axe longitudinal dudit corps (Figure 17).

7. Ressort selon la revendication 4, 5 ou 6, dans lequel la gorge (14) est adjacente à une extrémité du ressort.

8. Ressort selon la revendication 4, 5, 6 ou 7, comprenant une seconde gorge annulaire (Figure 3) séparée de la première gorge annulaire de la partie de bord globalement droit (12).

9. Ressort selon l'une quelconque des revendications 4 à 8, caractérisé par une languette (30) se projetant vers l'extérieur à partir d'une extrémité.

10. Ressort selon l'une quelconque des revendications 4 à 9, dans lequel une extrémité du tube comprend une partie concave (17) formant deux lèvres parallèles (34, 36) séparées par un canal continu (18) s'étendant sur toute la périphérie de ladite extrémité et espacé d'une distance inférieure à l'épaisseur de ladite paroi, lesdites lèvres (34, 36) étant suffisamment flexibles pour s'écarter, amenant ledit canal à former un joint d'aspiration sur toute la périphérie de ladite extrémité lorsque ladite extrémité est pressée contre une surface.

11. Ressort selon la revendication 10, dans lequel l'autre extrémité du tube comprend une partie concave (20) formant deux lèvres parallèles (40, 38) séparées par un second canal continu (20) s'étendant sur toute la périphérie de ladite autre extrémité et espacé d'une distance inférieure à l'épaisseur de ladite paroi, lesdites lèvres (40, 38) étant suffisamment flexibles pour se séparer, amenant ledit second canal continu (20) à former un joint d'aspiration sur toute la périphérie de ladite autre extrémité lorsque ladite autre extrémité est pressée contre une surface.
